Europäisches Patentamt

European Patent Office

Office européen des brevets

(19)

(11) **EP 0 695 956 B1**

(12) **EUROPÄISCHE PATENTSCHRIFT**

(45) Veröffentlichungstag und Bekanntmachung des Hinweises auf die Patenterteilung:
**10.03.1999 Patentblatt 1999/10**

(51) Int Cl.[6]: **G02B 6/12**

(21) Anmeldenummer: **95109798.9**

(22) Anmeldetag: **23.06.1995**

(54) **Asymmetrisches integriert-optisches Mach-Zehnder-Interferometer**

Integrated optic asymmetric Mach-Zehnder interferometer

Interféromètre Mach-Zehnder asymétrique en optique intégré

(84) Benannte Vertragsstaaten:
**CH DE DK ES FR GB IT LI NL SE**

(30) Priorität: **03.08.1994 DE 4427523**

(43) Veröffentlichungstag der Anmeldung:
**07.02.1996 Patentblatt 1996/06**

(73) Patentinhaber: **IOT Integrierte Optik GmbH & Co. KG**
**68753 Waghäusel (DE)**

(72) Erfinder:
- **Wolf, Barbara**
  **D-76709 Kronau (DE)**
- **Fabricius, Norbert, Dr.**
  **D-68766 Hockenheim (DE)**

(74) Vertreter: **Müller-Rissmann, Werner Albrecht, Dr. Carl Zeiss,**
**Patentabteilung**
**73446 Oberkochen (DE)**

(56) Entgegenhaltungen:
**EP-A- 0 644 441      DE-A- 3 804 330**
**DE-A- 4 331 611      US-A- 5 247 594**

- **PROC. SPIE - INT. SOC. OPT. ENG. , Bd. 1513, 12.März 1991, USA, Seiten 71-75, XP002010879 ARI TERVONEN ET AL: "Channel Waveguide Mach-Zehnder Interferometer for Wavelength Splitting and Combining."**

**Beschreibung**

Die Erfindung betrifft ein integriert-optisches Mach-Zehnder-Interferometer mit zwei Armen unterschiedlicher geometrischer Weglänge.

Ein Demultiplexer mit einem derartigen Mach-Zehnder-Interferometer ist aus EP 0 482 461 A bekannt. Die Ausführung der beiden Arme ist lediglich über ihren Einfluß auf den Wellenlängen- oder Polarisations-abhängigen Gangunterschied definiert.

Zu den möglichen Ausführungen des Verzweigers am Eingang und des 2 x 2 Kopplers am Ausgang werden, unter Berücksichtigung der Zitate, verschiedene Möglichkeiten mit Y-Verzweigern oder berührungslosen Kopplern angegeben.

In dem Konferenzbeitrag A. Tervonen et al., "Channel waveguide Mach-Zehnder interferometer for wavelength splitting and combining", Conference on Microoptics ECO, Den Haag, März 1991 wird der Unterschied der optischen Weglänge in Kurven gegenüber Geraden in Zusammenhang mit einer Anordnung nach EP 0 482 461 A beschrieben.

Ein Mach-Zehnder-Interferometer mit Y-Verzweiger am Eingang und zwei Y-Verzweigern am Ausgang mit zwei Ausgangswellenleitern ist, allerdings als Sensor, z.B. für Temperatur, auch in US 4 515 430 (Fig. 2) beschrieben.

Ein Arm ist beidseitig über enge S-Kurven an die Koppler angeschlossen und dazwischen gerade, der andere Arm macht einen großen Bogen. Der Einfluß von Biegungen auf die optische Weglänge wird nicht beschrieben. Vielmehr werden die Dämpfungsverluste durch die Gestaltung der beiden Arme minimiert.

Aufgabe der Erfindung ist es, ein gattungsgemäßes Mach-Zehnder-Interferometer so auszubilden, daß der optische Gangunterschied der beiden Arme in einfach definierter Weise durch den Unterschied der geometrischen Weglängen bestimmt wird.

Vorteilhafte Ausführungen und Anwendungen, insbesondere in Demultiplexern bzw. Multiplexern, sollen angegeben werden.

Gelöst wird die Aufgabe durch ein gattungsgemäßes Mach-Zehnder-Interferometer mit den kennzeichnenden Merkmalen des Anspruchs 1, wonach ein erster Arm aus Bogenstücken und geraden Stücken besteht, und der zweite Arm zu jedem Bogenstück des ersten Arms ein spiegelbildliches Bogenstück enthält und die Gesamtlänge der geraden Stücke des ersten Arms größer als die Gesamtlänge der geraden Stücke des zweiten Arms ist.

Die Erfindung geht dabei aus von der Erkenntnis, daß die Propagationskonstante oder die effektive Brechzahl gebogener Wellenleiter vom Radius abhängt, so daß die optische Weglänge im Bogen nicht nur der Bogenlänge proportional ist, sondern auch vom Radius abhängt.

Durch die erfindungsgemäße Maßnahme, in beiden Armen des Mach-Zehnder-Interferometers jeweils spiegelbildlich gleiche Bogenstücke vorzusehen, ist dieser Effekt aus der gesamten optischen Weglängendifferenz entfernt.

Spiegelbildlich gleich sind die Bogenstücke bei gleichem Radius und gleichem Winkel, bzw. Bogenlänge, jedoch entgegengesetzter Krümmungsrichtung. Die Bogenstücke müssen jedoch nicht spiegelsymmetrisch zu einer bestimmten Fläche angeordnet sein.

Bei den geraden Stücken sind optische und geometrische Weglängendifferenz proportional.

Als Nebeneffekt sind die reinen Krümmungsverluste, das heißt die Verluste, die beim Durchlaufen der Krümmungen in Form einer Abstrahlung auftreten, symmetrisiert. Der verbleibende Anteil der gesamten Krümmungsverluste sind die Übergangsverluste, die beim Wechsel von geraden Stücken zu Bogenstücken, bzw. stärker noch beim Wechselnder Krümmungsrichtung auftreten. Dieser Anteil kann jedoch durch geeignet gewählte Versätze zwischen den Wellenleitern gemäß Anspruch 8 erheblich verringert werden.

Mit einem derartigen Mach-Zehnder-Interferometer ergeben sich besonders vorteilhafte Demultiplexer, wenn gemäß den Ansprüchen 2 bzw. 3 am Ausgang ein Kreuzkoppler vom Typ zweier aufeinanderfolgender Y-Verzweiger, bzw. ein berührungsloser 2 x 2 Koppler angeordnet ist, wobei letzterer vorzugsweise asymmetrisch ist.

In der Ausführung des Demultiplexers nach Anspruch 5 entspricht dieser asymmetrische 2 x 2 Koppler dem in DE 43 31 611 beschriebenen Typ.

Vorteilhafte Formen der beiden Arme ergeben sich, wenn nach Anspruch 6 der erste Arm zwei gerade Stücke, der zweite Arm ein gerades Stück enthält, wenn nach Anspruch 7 das Mach-Zehnder-Interferometer, soweit es die am Anfang und Ende vorgesehenen Koppler bzw. Verzweiger zulassen, symmetrisch zu einer senkrecht zur Richtung des Eintritts-Wellenleiters stehenden Ebene ausgebildet ist, wenn nach Anspruch 8 an mindestens einem Übergang zwischen Wellenleiter-Stükken unterschiedlicher Krümmung ein seitlicher Versatz zur Reduktion der Dämpfung vorgesehen ist. Letztere Maßnahme ist aus DE 31 07 112 C und DE 44 17 698 bekannt.

Die Herstellung einer erfindungsgemäßen Anordnung geschieht bevorzugt in bekannter Weise unter Benutzung der Mikrolithographie und des Ionenaustausches, insbesondere mit Glas-Substraten.

Mit der Auslegung des Demultiplexers nach Anspruch 10 ergibt sich ein Polarisations- oder Wellenlängendemultiplexer.

Nach Anspruch 11 können alle beschriebenen Anordnungen auch durch Umkehrung der Strahlengänge als Multiplexer funktionieren.

Näher erläutert wird die Erfindung anhand der Zeichnung.

Fig. 1   zeigt schematisch ein Ausführungsbeispiel eines Mach-Zehnder-Demultiplexers mit zwei Y-Verzweigern im Ausgang;

Fig. 2 zeigt schematisch ein Ausführungsbeispiel eines Mach-Zehnder-Demultiplexers mit konventionellem berührungslosem 2 x 2 Koppler;

Fig. 3 zeigt schematisch die Anordnung mit Seitenversatz zur Verlustminderung an den Übergangsstellen zwischen Stücken verschiedener Krümmung in den beiden Armen des erfindungsgemäßen Mach-Zehnder-Interferometers;

Fig. 4 zeigt schematisch ein Ausführungsbeispiel eines Mach-Zehnder-Demultiplexers mit einem berührungslosen asymmetrischen 2 x 2 Koppler nach DE 43 31 611 A.

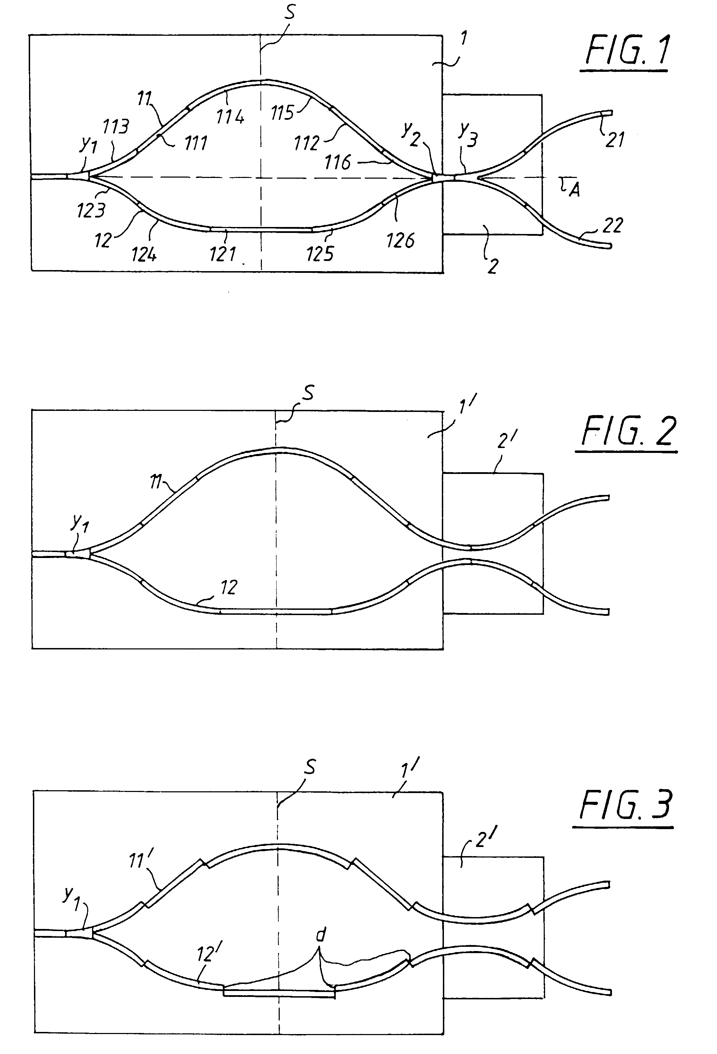

Die Anordnung nach Fig. 1 entspricht zunächst weitgehend einem Demultiplexer gemäß EP 0 482 461 A mit einem asymmetrischen Mach-Zehnder-Interferometer (1) mit einem Y-Verzweiger $Y_1$ am Eingang, zwei verschieden langen Armen (11,12) und am Ausgang zwei aufeinanderfolgenden Y-Verzweigern $Y_2$, $Y_3$, welche einen Kreuzkoppler (2) mit zwei Ausgangswellenleitern (21,22) bilden. Der zweite Y-Verzweiger $Y_3$ ist asymmetrisch.

Die erfindungsgemäße Besonderheit ist die Gestaltung der Arme (11,12). Der erste Arm (11) besteht aus Bogenstücken (113,114,115,116) und zwei geraden Stücken (111 und 112). Der zweite Arm (12) hat zu jedem Bogenstück des ersten Arms (11) ein zur Achse A des Eingangs symmetrisches Bogenstück (123,124,125,126) mit gleichem Radius und gleichem Winkel. Es gibt im zweiten Arm (12) jedoch nur ein gerades Stück (121) mit der Länge $L_{121}$, welches parallel zur Achse A liegt. Die geraden Stücke (111,112) des ersten Arms (11) liegen jedoch schräg zur Achse A, ihre Gesamtlänge $L_{111} + L_{112}$ ist daher größer als die Länge $L_{121}$:

$$L_{111} + L_{112} = L_{121} + \Delta L.$$

L ist damit auch der gesamte geometrische Längenunterschied des asymmetrischen Mach-Zehnder-Interferometers.

Man sieht, daß die Anordnung der Arme (11,12) spiegelsymmetrisch zu einer Symmetrieachse S senkrecht zur Achse A ist.

Fig. 2 zeigt eine Ausführung mit einem berührungslosen 2 x 2 Koppler (2') im Ausgang des Mach-Zehnder-Interferometers (1'), dessen Arme (11', 12') im Übergangsbereich zum 2 x 2-Koppler (2') jetzt nicht mehr ganz symmetrisch zur Ebene S sind.

Eine Variante von Fig. 2 zeigt Fig. 3, bei der an den Übergängen zwischen Stücken der Arme (11', 12') mit verschiedener Krümmung ein seitlicher Versatz der Wellenleiterstruktur vorgesehen ist, der wie aus DE 31 07 112 C und DE 44 17 698 bekannt zur Minderung der Dämpfung geeignet ist. Natürlich kann diese Maßnahme auch nur an einzelnen besonders kritischen Übergängen realisiert werden.

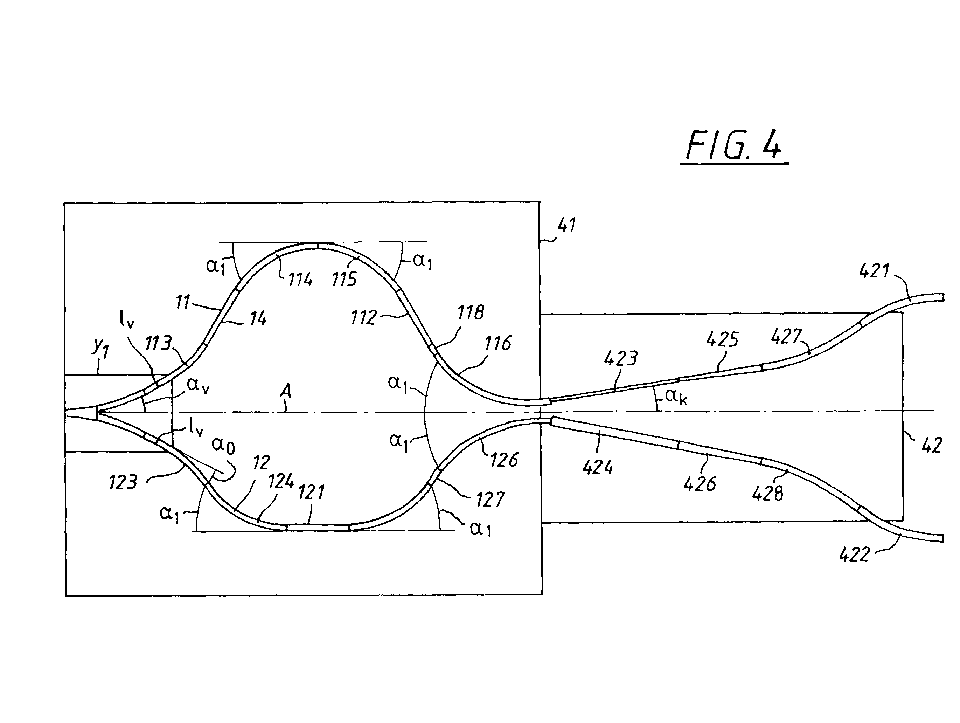

Eine bevorzugte Ausführungsform mit asymmetrischen, adiabatisch schräg auseinanderlaufenden Wellenleitern im berührungslosen 2 x 2 Koppler nach DE 43 31 611 zeigt Fig. 4.

Das Mach-Zehnder-Interferometer (41) mit den Wellenleiter-Armen (11 und 12) hat am Anfang einen Y-Verzweiger $Y_1$ mit einem Abzweigradius $R_v$ = 100mm, einem Abzweigwinkel von $\alpha_v = 0,60°$ und geraden Endstücken der Länge $L_v = 1,0$mm. Die anschließenden Bogenstücke (113,123) haben einen Radius R = 70mm und einen Bogenwinkel $\alpha_0 = 1,16°$. Die weiteren Bogenstücke (114,115,116 und 124,125,126) sind untereinander gleich, haben den gleichen Radius R und einen Bogenwinkel $\alpha_1 = \alpha_0 + \alpha_v = 1,76°$.

Das gerade Stück (121) im zweiten Arm hat eine Länge von $L_2 = 6668$ µm. Die Länge $L_1$ der beiden schrägliegenden geraden Stücke (111 und 112), die mit (121) ein gleichschenkliges Dreieck bilden, ergibt sich zu

$$L_1 = L_2/2 \cos \alpha_1 = 3335 \text{ µm.}$$

Damit ist die geometrische Weglänge des zweiten Arms (12) um $\Delta L = 2 L_1 - L_2 = 3,1$ µm kürzer als die des ersten Arms (11).

Zur Anpassung an die Geometrie des 2 x 2 Kopplers (42) sind in beide Arme (11,12) noch kurze gerade Stücke (127,118) mit der Länge $L_3 = 6$ µm eingefügt.

Alle Wellenleiter-Stücke im Bereich des Mach-Zehnder-Interferometers (41) haben eine Weite von $w_0$ = 1,5 µm und gehen im Koppelbereich des 2 x 2 Kopplers (42) bei einem Abstand $d_K = 5$ µm stumpf in die unter einem Winkel $\alpha_K = 0,1°$ auseinanderlaufenden geraden Wellenleiter (423) mit der Weite $w_1 = 1,1$ µm und (424) mit der weite $W_2 = 1,9$ µm über, welche jeweils 7,2mm lang sind.

Daran schließen sich Taper (425,426) von jeweils $L_t = 0,86$mm an, die die Weite der Wellenleiter wieder auf das Standardmaß $w_0 = 1,5$ µm bringen.

Die anschließenden Bogenstücke (427,428 und 421,422) haben jeweils den Radius $R_1 = 90$mm und den Bogenwinkel 2°. Ihre Geometrie ist durch die Forderung bestimmt, daß die Ausgänge der Stücke (421, 422) in 250 µm Abstand parallel liegen sollen, bei möglichst großen Radien zur Minimierung der Dämpfung und bei trotzdem brauchbarer Baulänge. Die gezeigte Gesamtanordnung hat eine Länge von knapp 32mm, davon 17,2mm für das Mach-Zehnder-Interferometer (41) und 14,2mm für den 2 x 2 Koppler (42). Die größte Breite des Mach-Zehnder-Interferometers (41) beträgt ca. 0,2mm.

Mit dieser Ausführung ergibt sich ein effektiver Demultiplexer für die beiden Wellenlängen $\lambda_1 = 1,31\,\mu m$ und $\lambda_2 = 1,55\,\mu m$, welche in der optischen Nachrichtentechnik weit verbreitet sind.

Bei den im Beispiel verwendeten Radien der Bogenstücke spielen Krümmungsverluste noch keine Rolle. Erst wenn die gewünschte Armlängendifferenz größer wird - das ist der Fall wenn die zu trennenden Wellenlängen näher beieinanderliegen als hier - oder wenn eine größere Integrationsdichte auf dem Chip eine kürzere Baulänge erfordert.

Die Phasendifferenzen $\Delta\Phi$ für beide Wellenlängen am Ausgang des Mach-Zehnder-Interferometers (41) berechnen sich aus den effektiven Indizes und der Armlängendifferenz $\Delta L$:

$$\text{Gleichung 1:} \qquad \Delta\Phi(\lambda i) = (2\pi/\lambda i) \times n_{eff}(\lambda i) \times \Delta L$$

Von der Modenführung her ist es günstiger, wenn die größere Wellenlänge im breiteren Arm (424) des 2 x 2 Kopplers (42) geführt wird, also durch die Armlängendifferenz $\Delta L$ konstruktive Interferenz erfährt. Es muß also mit $\lambda_1 = 1,31\,\mu m$ und $\lambda_2 = 1,55\,\mu m$ gelten:

$$\text{Gleichung 2:} \qquad \Delta\Phi(\lambda_1) = (2\,m_1 - 1) \times \pi$$

$$\text{Gleichung 3:} \qquad \Delta\Phi(\lambda_2) = (2\,m_2) \times \pi$$

Dabei sind $m_1$ und $m_2$ ganze Zahlen, die die Zahl der in der geometrischen Weglängendifferenz $\Delta L$ untergebrachten Wellenlängen der beiden Lichtflüsse mit Wellenlänge $\lambda_1$ bzw. $\lambda_2$ angeben. Durch Lösung des aus den Gleichungen 1, 2 und 3 bestehenden Gleichungssystems ergibt sich:

$$\text{Gleichung 4:} \qquad m_1 = \frac{n_{eff}(\lambda_1) \cdot \lambda_2}{n_{eff}(\lambda_2)\,\lambda_1} \times m_2 + 0,5$$

Für den im Beispiel erreichten Wert $\Delta L = 3,1\,\mu m$ ergibt sich eine ganzzahlige Lösung von Gleichung 4 mit $m_2 = 3$, $m_1 = 4$ (in guter Näherung).

Das vorgestellte Design für einen Mach-Zehnder-Demultiplexer nach Fig. 4 hat eine hohe Toleranz gegenüber Fertigungstoleranzen und Umweltparametern.

Wird für die beiden Arme (11,12) Polarisationsdoppelbrechung sichergestellt, dann kann die Anordnung auch als Polarisations-Demultiplexer für zwei orthogonale Polarisationsrichtungen angelegt werden.

Die erfindungsgemäße Anordung kann auch als Sensor oder Modulator ausgebildet werden, wenn ein oder beide Arme (11,12) Einflüssen ausgesetzt werden, die den effektiven Brechungsindex $n_{eff}$ beeinflussen, wie z.B. Temperatur, Druck, Adsorbate (chemischer Sensor), elektrische Felder. Letzteres ist für symmetrische Mach-Zehnder-Interferometer mit 2 x 2 Koppler vom Y-Y-Typ z.B. aus US 4 674 827, für solche mit berührungslosem 2 x 2 Koppler z.B. aus US 5 119 447 bekannt.

**Patentansprüche**

1. Integriert-optisches Mach-Zehnder-Interferometer mit zwei Armen (11,12) mit unterschiedlicher geometrischer Weglänge, dadurch gekennzeichnet, daß ein erster Arm (11) aus Bogenstücken (113,114,115,116) und geraden Stücken (111,112) besteht, daß der zweite Arm (12) zu jedem Bogenstück des ersten Arms (11) ein spiegelbildliches Bogenstück (123,124,125,126) enthält und die Gesamtlänge der geraden Stücke (121) des zweiten Arms (12) kleiner als die Gesamtlänge der geraden Stücke (111,112) des ersten Arms (11) ist.

2. Demultiplexer mit einem Mach-Zehnder-Interferometer nach Anspruch 1, dadurch gekennzeichnet, daß am Ausgang ein Kreuzkoppler (1) vom Typ zweier aufeinanderfolgender Y-Verzweiger ($Y_2,Y_3$) angeordnet ist.

3. Demultiplexer mit einem Mach-Zehnder-Interferometer nach Anspruch 1, dadurch gekennzeichnet, daß am Ausgang ein berührungsloser 2 x 2 Koppler (2') angeordnet ist.

4. Demultiplexer nach Anspruch 3, dadurch gekennzeichnet, daß der 2 x 2 Koppler asymmetrisch ist.

5. Demultiplexer nach Anspruch 4, dadurch gekennzeichnet, daß der 2 x 2 Koppler (42) aus zwei schräg adiabatisch auseinander laufenden Wellenleitern (423, 424) mit unterschiedlicher Propagationskonstanten besteht, die stumpf an symmetrische Bögen (116, 126) gleicher Propagationskonstanten anschließen.

6. Mach-Zehnder-Interferometer oder Demultiplexer nach mindestens einem der Ansprüche 2 bis 5, dadurch gekennzeichnet, daß der erste Arm (11) zwei gerade Stücke (111,112) und der zweite Arm (12) ein gerades Stück enthält.

7. Demultiplexer nach mindestens einem der Ansprüche 3 bis 5, dadurch gekennzeichnet, daß das Mach-Zehnder-Interferometer, soweit es die am Anfang und Ende vorgesehenen Koppler (2, 2') bzw. Verzweiger (41) zulassen, symmetrisch zu einer senkrecht zur Richtung (A) des Eintritts-Wellenleiters stehenden Ebene (S) ausgebildet ist.

8. Demultiplexer nach Ansprüch 5, dadurch gekennzeichnet, daß an mindestens einem Übergang zwischen Wellenleiter-Stücken unterschiedlicher Krümmung ein seitlicher Versatz (d) zur Reduktion der Dämpfung vorgesehen ist.

9. Demultiplexer nach mindestens einem der Ansprüche 5 oder 8, dadurch gekennzeichnet, daß es mit vergrabenen Wellenleitern unter Benutzung der Mikrolithographie und des Ionenaustauschs aufgebaut ist.

10. Mach-Zehnder-Interferometer nach Anspruch 1, dadurch gekennzeichnet, daß für Licht einer bestimmten Wellenlänge und Polarisationsrichtung nach Durchlaufen der beiden Arme (11,12) gleiche Phase und für Licht einer anderen bestimmten Wellenlänge oder orthogonaler Polarisationsrichtung nach Durchlaufen der beiden Arme (11,12) entgegengesetzte Phase auftritt.

11. Verwendung eines Mach-Zehnder Interferometer nach Anspruch 1 oder Demultiplexer nach mindestens einem der Ansprüche 2 bis 5 oder 7 bis 10, dadurch gekennzeichnet, daß sie durch Umkehrung der Strahlengänge als Multiplexer wirkt.

**Claims**

1. Integrated optical Mach-Zehnder interferometer comprising two arms (11, 12) of different geometrical path length, characterized in that a first arm (11) is composed of curve sections (113, 114, 115, 116) and straight sections (111, 112), that the second arm (12) has a curve section (123, 124, 125, 126) as a mirror image of each curve section of the first arm (11) and that the total length of the straight sections (121) of the second arm (12) is shorter than the total length of the straight sections (111, 112) of the first arm (11).

2. Demultiplexer with a Mach-Zehnder interferometer according to claim 1, characterized in that a cross coupler (1) of the type of two subsequent y-branches (Y$_2$, Y$_3$) is arranged at the exit.

3. Demultiplexer with a Mach-Zehnder interferometer according to claim 1, characterized in that a contactless 2 x 2 coupler (2') is arranged at the exit.

4. Demultiplexer with a Mach-Zehnder interferometer according to claim 3, characterized in that the 2 x 2 coupler is asymmetric.

5. Demultiplexer with a Mach-Zehnder interferometer according to claim 4, characterized in that the 2 x 2 coupler (42) is composed of two adiabatically divergent wave guides (423, 424) with different constants of propagation, which wave guides are butt connected to symmetrical arcs (116, 126) of identical propagation constants.

6. Mach-Zehnder interferometer or demultiplexer according to at least one of claims 1 to 5. characterized in that the first arm (11) comprises two straight sections (111, 112) and the second arm (12) comprises one straight section.

7. Demultiplexer according to at least one of claims 3 to 6, characterized in that the Mach-Zehnder interferometer is constructed symmetrical to a plane (S) which is oriented orthogonally to the direction (a) of the entrance wave guide, as far as the couplers (2, 2') respectively the branches (41), which are provided at the entrance and exit sides, allow for this.

8. Demultiplexer according to claim 5, characterized in that at at least one junction between wave guide sections of different curvature a lateral offset (d) is provided for reducing attenuation.

9. Demultiplexer according to at least one of claims 5 to 8, characterized in that it is constructed with buried waveguides utilizing microlithography and ion exchange.

10. Mach-Zehnder interferometer according to claim 1, characterized in that light of a distinct wave length and polarization direction emerges with the same phase after passage through either of the two arms (11, 12), and that light of another distinct wavelength and of orthogonal polarization direction emerges with opposite phases after passage through either of both arms (11, 12).

11. Use of a Mach-Zehnder interferometer according to claim 1 or multiplexer according to at least one of the claims 2 to 5 or 7 to 10, characterized in that it operates as a multiplexer by inversion of the beam paths.

**Revendications**

1. Interféromètre de Mach-Zehnder à optique intégré équipé de deux bras (11, 12) de longueur de chemin géométrique différente, caractérisé en ce qu'un premier bras (11) se compose de segments cintrés (113, 114, 115, 116) et de segments droits (111, 112), que le second bras (12) comprend pour chaque segment cintré du premier bras (11) un segment cintré inversé (123, 124, 125, 126) et que la longueur totale des segments droits (121) du second bras (12) est inférieure à la longueur totale des segments droits (111, 112) du premier bras (11).

**2.** Démultiplexeur avec un interféromètre de Mach-Zehnder selon la revendication 1, caractérisé en ce qu'un coupleur en croix (1) du type composé de deux branchements Y successifs ($Y_2$, $Y_3$) est disposé à la sortie.

**3.** Démultiplexeur avec un interféromètre de Mach-Zehnder selon la revendication 1, caractérisé en ce qu'un coupleur 2 x 2 sans contact (2') est disposé à la sortie.

**4.** Démultiplexeur selon la revendication 3, caractérisé en ce que le coupleur 2 x 2 est asymétrique.

**5.** Démultiplexeur selon la revendication 4, caractérisé en ce que le coupleur 2 x 2 (42) est composé de deux guides d'ondes adiabatiques à divergence oblique (423, 424) de constante de propagation différente qui sont raccordés en bout à bout à des arcs symétriques (116, 126) de même constante de propagation.

**6.** Interféromètre de Mach-Zehnder ou démultiplexeur selon l'une au moins des revendications 2 à 5, caractérisé en ce que le premier bras (11) comprend deux segments droits (111, 112) et que le second bras (12) comprend un segment droit.

**7.** Démultiplexeur selon l'une au moins des revendications 3 à 5, caractérisé en ce que l'interféromètre de Mach-Zehnder est symétrique à un plan (S) perpendiculaire à la direction (A) du guide d'ondes d'entrée dans la mesure où les coupleurs (2, 2') et les branchements (41) disposés à l'entrée et à la sortie le permettent.

**8.** Démultiplexeur selon la revendication 5, caractérisé en ce qu'un décalage latéral (d) servant à réduire l'amortissement est prévu au niveau d'une transition au moins entre segments de guide d'ondes de courbure différente.

**9.** Démultiplexeur selon l'une au moins des revendications 5 ou 8, caractérisé en ce qu'il fait intervenir des guides d'ondes enfouis réalisés à l'aide de procédés de la microlithographie et de l'échange d'ions.

**10.** Interféromètre de Mach-Zehnder selon la revendication 1, caractérisé en ce que la lumière d'une longueur d'onde et d'un sens de polarisation donnés est en phase après avoir traversé les deux bras (11,12) et que la lumière d'une autre longueur d'onde et d'un autre sens de polarisation donnés est en opposition de phase après avoir traversé les deux bras (11, 12).

**11.** Utilisation d'un interféromètre de Mach-Zehnder selon la revendication 1 ou d'un démultiplexeur selon l'une au moins des revendications 2 à 5 ou 7 à 10, caractérisée en ce qu'elle agit comme un multiplexeur par l'inversion des trajets lumineux.

*FIG.1*

*FIG.2*

*FIG.3*

*FIG.4*

EP 0 695 956 B1